## Europäisches Patentamt

## European Patent Office

## Office européen des brevets

(11) Publication number: **0 117 920**
**B1**

(12) **EUROPEAN PATENT SPECIFICATION**

(45) Date of publication of patent specification: **13.04.88**

(21) Application number: **83113076.0**

(22) Date of filing: **23.12.83**

(51) Int. Cl.⁴: **B 65 B 43/50,** B 65 B 61/18,
B 65 G 47/84, B 65 G 47/91,
B 65 B 17/00, B 65 G 37/02

(54) An apparatus for performing a treatment operation.

(30) Priority: **24.12.82 JP 232086/82**
**24.12.82 JP 232087/82**
**24.12.82 JP 232088/82**
**24.12.82 JP 232089/82**
**29.12.82 JP 234782/82**
**30.12.82 JP 234156/82**

(43) Date of publication of application:
**12.09.84 Bulletin 84/37**

(45) Publication of the grant of the patent:
**13.04.88 Bulletin 88/15**

(84) Designated Contracting States:
**AT BE CH DE FR GB IT LI NL SE**

(56) References cited:
**EP-A-0 035 645**
**DE-A-2 703 818**
**DE-A-2 729 747**
**DE-B-1 297 972**
**DE-U-6 949 351**
**GB-A-1 324 699**
**GB-A-2 013 606**
**GB-A-2 098 954**

(73) Proprietor: **AB TETRA PAK**
**Box 61**
**S-221 00 Lund (SE)**

(72) Inventor: **Takagi, Kunihiko**
**19, Nouso Kishinoshita**
**Fushimi-Ku Kyoto (JP)**
Inventor: **Tsubota, Nobutaka** Yodo dormitory
**Kyoto Seisakusho Co., Ltd.**
**598-2, Yodoshinmachi Fushimi-Ku Kyoto (JP)**
Inventor: **Utsumi, Yoshikazu**
**47, Misasagihigashiura-Cho**
**Daigo, Fushimi-Ku Kyoto (JP)**
Inventor: **Yamamoto, Kaoru**
**27-2, Sugata-cho Nishikujyo**
**Minami-Ku Kyoto (JP)**

(74) Representative: **Glawe, Delfs, Moll & Partner**
**Patentanwälte**
**Postfach 26 01 62 Liebherrstrasse 20**
**D-8000 München 26 (DE)**

(56) References cited:
**US-A-2 971 636**
**US-A-3 851 441**
**US-A-2 956 612**

## Description

The present invention relates to an apparatus for applying accessory articles to objects conveyed in equidistant succession on a conveyor, comprising a feeding device for feeding a continuous strip carrying said accessory articles, cutting means for separating the accessory articles from said strip and transfer means for transferring the separated articles from said cutting means to a location where they are adhesively attached to said objects.

An apparatus of this kind is known from the GB—A—2 013 606. In this apparatus drinking straws or the like carried in a carrier band are separated from the continuous band and applied to packaging containers conveyed in an equidistant succession on a conveyor by means of a feeding and adhering device. As the container remains on the conveyor during the adhering operation it is not possible to apply the accessory article to its lower surface, in particular objects with only one flat surface cannot be treated by this apparatus.

It is the object of the invention to provide an apparatus with which accessory articles can be applied also to the lower surface of the objects with respect to their position on the conveyor, which is simple in construction and reliable in operation.

This object is solved by the features described in claim 1.

The depending claims are relating to further developments of the invention.

In DE—B—12 97 972 an apparatus is described for producing sandwich-like biscuits comprising a linear conveyor and a revolving holder device or carrier wheel having an odd number of holders at its external periphery and being rotated in synchronism with said conveyor. On the conveyor biscuit plates are conveyed in a continuous and equidistant succession to and from said carrier wheel. During operation of said carrier wheel every second of said biscuits is lifted by a holder means, transported through a circular path and is then laid down on one of the remaining biscuits. However, no treatment operation is performed on the biscuits during the circular path.

In the apparatus according to the present invention the adhering operation is performed on the objects at the circular path and the feeding and adhering operations are realized in a continuous manner. It is possible to adhere the accessory articles to the lower surfaces of the objects. Additional abutments are not necessary.

The abovementioned features and advantages of the present invention will become more apparent by reference to the following description of preferred embodiments of the invention taken in conjunction with the accompanying drawings, wherein:

Fig. 1 is a front view of the device for adhering the accessory article to the objects according to the present invention.

Fig. 2 is a perspective view of the object to which the accessory article e.g. a small bag containing a spoon is adhered.

Fig. 3 is a perspective view of the continuous strip of the small bags containing the spoons and of a small bag forming the continuous strip.

Figs 4 to 10 are views illustrating the actuating state in which the objects are supplied to the carrier wheel and taken out therefrom.

Fig. 11 is a front view of the relationship between the carrier wheel and cam with the carrier wheel being partially cut away.

Fig. 12 is a side view of the relationship between the carrier wheel and the cam and

Figs. 13 to 16 are views related to the actuation in which the valve transfer lever provided on the carrier wheel and fixed cam and movable cam on the main body are communicated with each other.

Fig. 17 is a longitudinal section view of fig. 11.

Fig. 18 is an enlarged view of the feeding device part of the spoon adhering machine.

Fig. 19 (a)—(f) are front views illustrating the process during which the continuous strip of accessory articles is fed out.

Fig. 20 is a longitudinal side view of part of the feeding device.

Fig. 21 is a front view of the state in which the continuous strip of accessory articles is windingly hung over the rotatable member.

Figs. 22 and 23 are front views of varied embodiments of the rotatable member.

Fig. 24 is a front view of the transfer means of the invention using a transfer drum.

Fig. 25 is a longitudinal sectional view of the transfer drum according to the present invention.

Fig. 26 is a sectional view as taken along the line III—III of Fig. 25.

Fig. 27 is a front view of the transfer means of the invention using a rotatable transfer drum which adheres the accessory article diagonally over the side of the packaging containers.

Fig. 28 is a view illustrating the principle of forming the relationship between the transfer drum and the object at the time of oblique adhesion of the accessory article.

Fig. 29 is a perspective view partially illustrating the continuous strip of accessory articles e.g. spoons.

Fig. 30 is a perspective view illustrating the state in which the small bag containing the spoon is adhered to the object.

Fig. 31 is a schematic view of the whole part of the adhering device using the transfer means for oblique adhesion and the adhering device of the present invention.

Fig. 32 is a front view of the adhering device according to the present invention.

Fig. 33 is a partially cut away plan view of Fig. 3.

Fig. 34 is a front view illustrating one example of the interlocking mechanism of the device according to the present invention and

Fig. 35 is an enlarged front view of the locus described by the pusher plate.

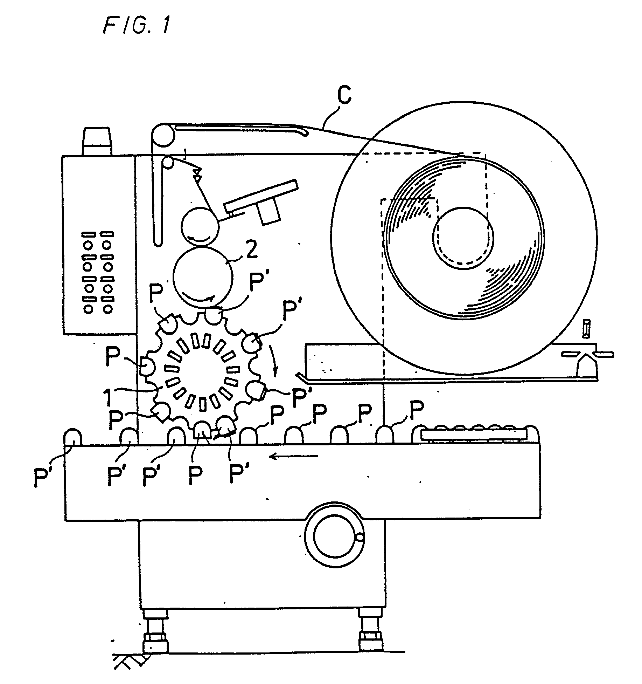

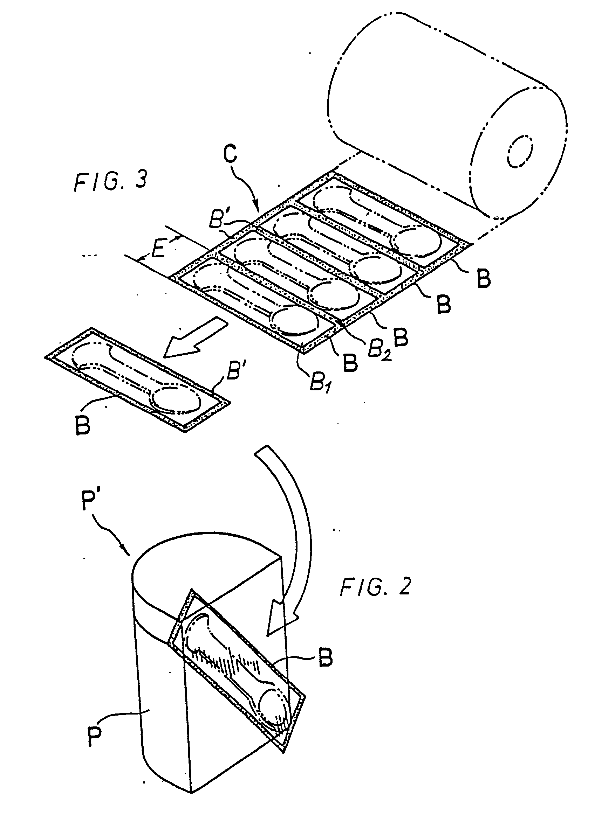

Fig. 1 is a front view of a spoon adhering device equipped with the device for supplying the objects or package container to the carrier wheel and taking it out from said wheel according to the present invention, in which the numeral 1 is the carrier wheel for receiving the package container P, as shown in Fig. 2 and subsequently transferring it therefrom, the rotation of which is illustrated to be accompanied by adsorbing the package container P which is successively conveyed by the bucket conveyor so that the package container P may be held by the carrier wheel 1, the package container P then becomes in contact with the small bag B containing the spoon which is transmitted by a drum for transferring the package, when it reaches the upper position through passing the rotational process by the carrier wheel, said small bag B is, as shown in Fig. 2, adhered to the side of the package container P, which is subsequently transmitted down in successive order and reaches the conveyor, being carried toward left side.

The small bag B containing the spoon is, as shown in Fig. 3, formed by means of cutting out said small bags B one by one during the intermediate course of the process from a long and narrow strip of continuous package C comprising two sheets of synthetic resin films, the clearance between which the spoon is inserted and contained after welding them at their predetermined position.

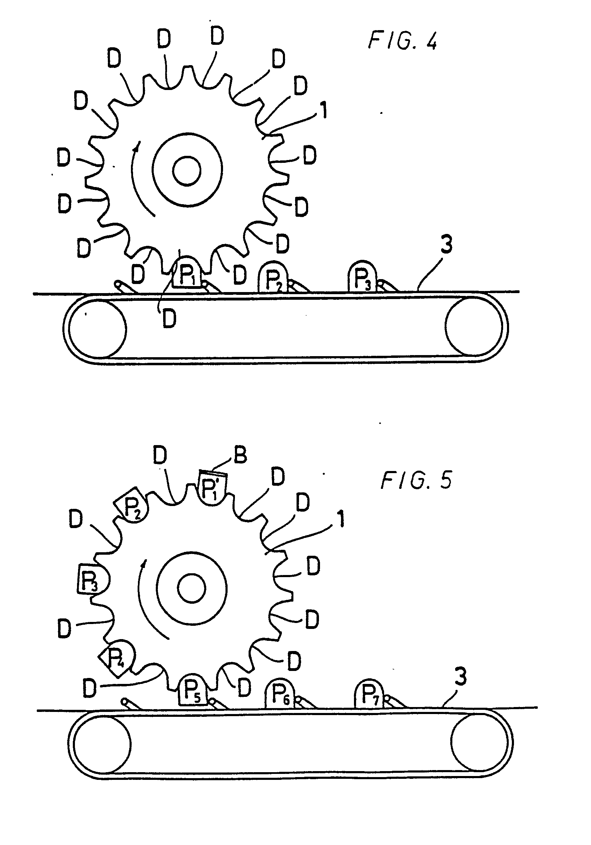

Figs. 4 to 10 illustrate the flow of the process in which the package container P is successively supplied from the bucket conveyor 3 to the carrier wheel 1, the small bag B is adhered to the package container P which has reached the upper position of its rotating process, the small bag B is then transferred down, and the package container P' to which said small bag is adhered is successively fed out of the wheel, being carried out by the conveyor.

This carrier or bucket wheel 1 possesses package container receptacles (buckets) D in odd numbers (15 units in the drawings), whereas the bucket conveyor 3 is arranged to be horizontally removed below the above-mentioned bucket wheel 1, the pitch between the buckets of the bucket conveyor 3, i.e. the pitch between the normal positions to the package containers fixed by convex portions pushing the package containers so as to feed them, is formed to be double in width of that between the buckets of the above-mentioned bucket wheel, both the buckets being formed to be in the same phase to each other at the bottom of the bucket wheel where the above-mentioned wheel has access to the above-mentioned bucket conveyor.

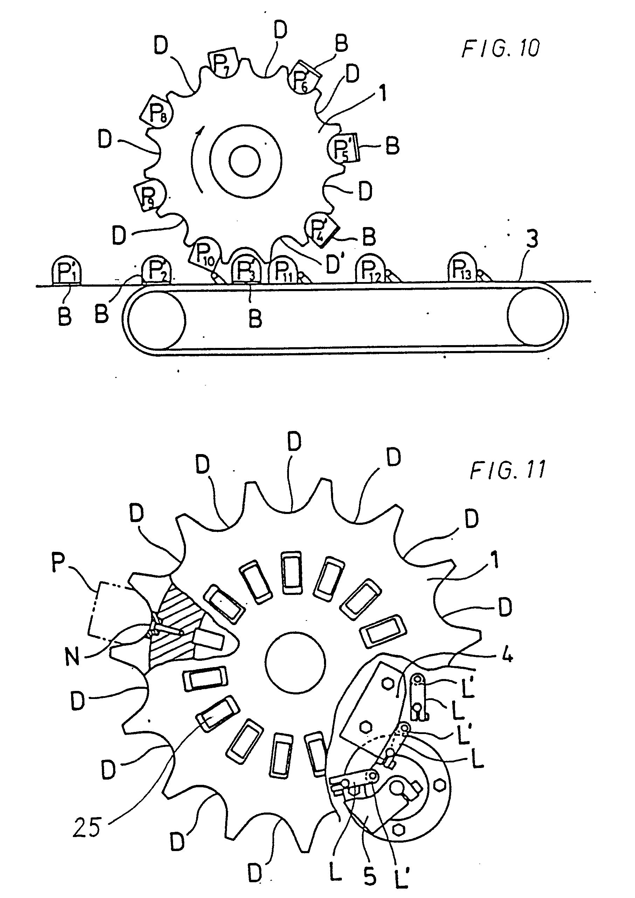

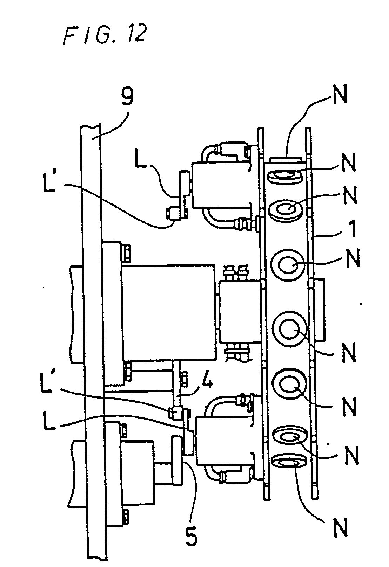

As shown in Figs. 11 and 12, suction pipes N for adsorbing the package container P by vacuum action are provided with aperture on the bottoms of the buckets D placed on the external periphery of the bucket wheel 1, each of these suction pipes N being equipped with a valve for giving rise to suction action and releasing such an action by the vacuum action and a valve transfer lever L for closing/opening the valve, the vibrating motion of which adapts the suction pipes N to adsorb the package containers in a direction toward the buckets by suction action generated by the vacuum, or to be released from such an action, thereby making the package containers one by one free from the adsorbing force.

At the main bodies' side on which the bucket wheel is provided, a fixed cam 4 is rotatively supported directly by a frame 9 and a movable cam 5 is rotatively supported through a bearing by the frame 9. The acting part of these cams is provided in a manner of touching a rotating locus of an actuating roller L' pivoted to the top end of the above-mentioned valve transfer lever L.

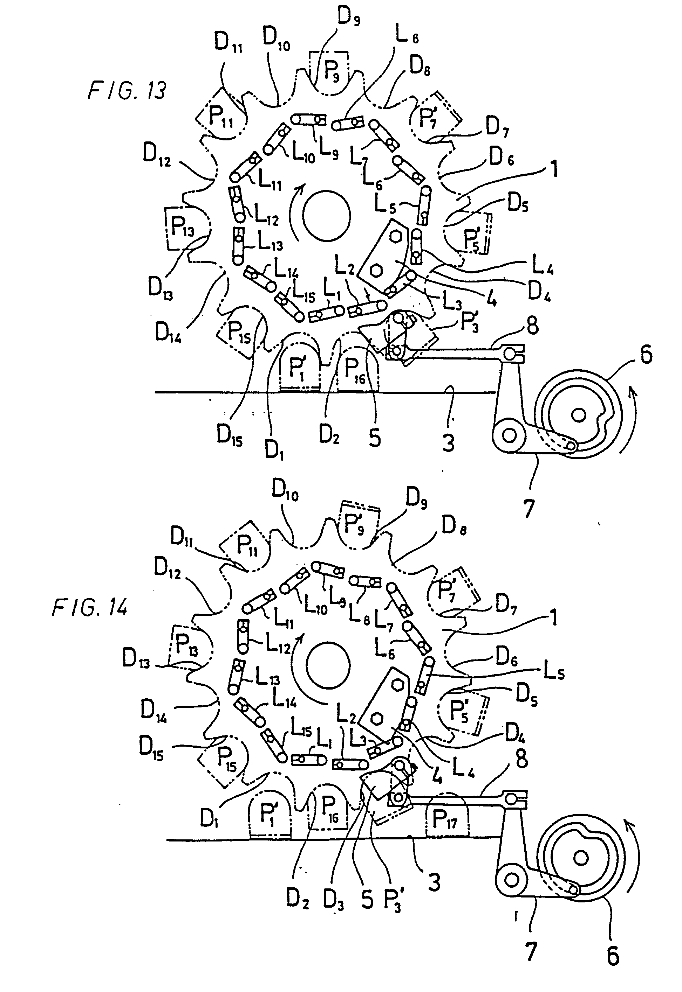

Figs. 13 to 16 are views illustrating the relationship between each of the valve transfer levers L which are provided on the bucket wheel 1 in a manner of rotating thereon and the fixed cam 4 as well as the relationship between said valve transfer levers and the movable cam 5 which is rotated in interlocking with the bucket wheel 1.

The above-mentioned fixed cam 4 pushes the actuating roller L' pivoted to the top end of the valve transfer lever L which is rotated to be moved so that the suction pipe N may be led into the suction state by the vacuum in order to adsorb the package container, whereas the movable cam 5, interlocking with the rotation of the bucket wheel 1, is adapted to be vibratingly moved through a crank 7 and a connecting rod 8 by a circular cam 6 which is rotated completely once whenever the bucket D of the bucket wheel takes a two-pitch rotation corresponding to a double interval between said buckets, and when the bucket D of the bucket wheel reaches the position right under the above-mentioned wheel near the bucket conveyor 3, the movable cam 5 is adapted to push the valve transfer lever L to be moved so as to release the suction pipe N from the suction action, whereby the package container P is made free from the adsorbing force so that it commences to be taken out.

Next, the actuation of the foregoing device according to the present invention may be described as follows:

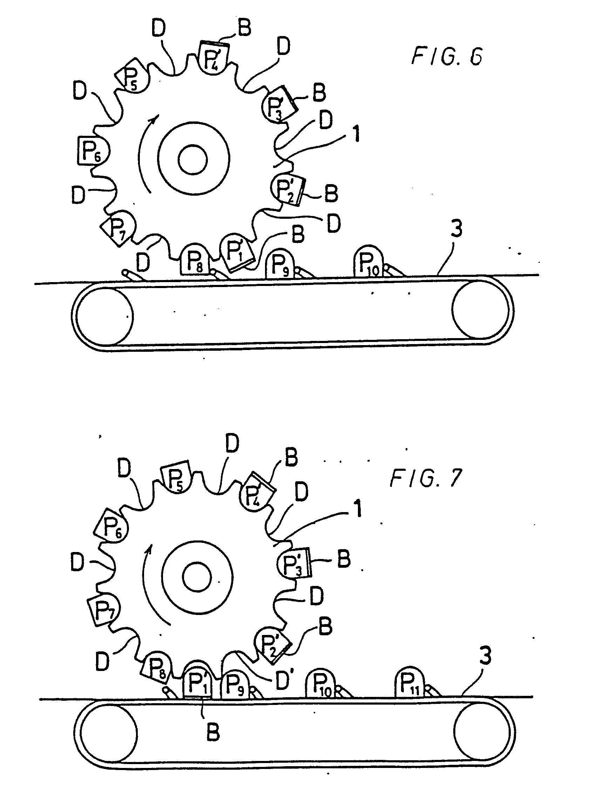

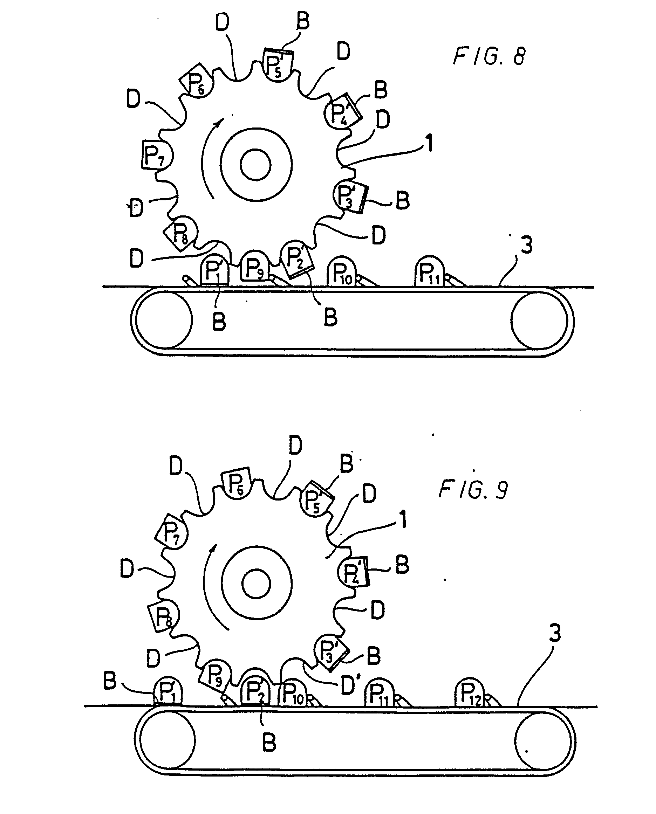

As shown in Fig. 4, the package container $P_1$ which has reached the position right under the bucket wheel 1 after being carried by the bucket conveyor 3 is housed in the bucket D of the bucket wheel by means of being adsorbed thereto. (In that case, in order to facilitate adsorption action, it may be advantageous to have another separate means for pushing up the package container in synchronism with the adsorption housing thereof). Subsequently, when the wheel 1 (hereinafter the bucket wheel is referred to as the wheel) turns clockwise by two pitches corresponding to two intervals between the buckets, the package containers $P_2$ which is going to be carried while being held in the following bucket of the bucket conveyor 3 is housed in next bucket but one in which the last package container $P_1$ was housed by means of being adsorbed thereto. Thus, when the continued rotation of the wheel 1, the package containers on the bucket conveyor are housed one by one in every other following bucket of the wheel 1 by being adsorbed thereto in sequence of $P_2$, & $P_3$, ... and further to approaching of the package container $P_1$ to its rotational top position, the small bag B is transferred to be adhered to said package container by a drum for transferring the package 2 (see Fig. 5), the package containers $P_1'$, $P_2'$ & $P_3'$ to which the small bag were adhered are successively transmitted down and the package container $P_1'$ to which the small bag was adhered reaches the position which is located by one pitch this side of the position at which the package container was located in undergoing the last adsorption action. (See Fig. 6). At that time the bucket of the bucket conveyor possessing the pitch, double in width of the pitch between the buckets of the wheel, is located the position under the wheel into which the package container $P_1'$ was housed from the bucket conveyor by means of being adsorbed at the first process, so the package container $P_8$ on said bucket conveyor is housed in the bucket D of the wheel by means of being adsorbed thereto. Subsequently, the package container $P_1'$ which was adsorbed at the first process reaches the above-mentioned position, a mechanism, which is referred to in the below part, is operative in releasing the package container $P_1'$ from the adsorption force on the conveyor D, whereby said package container $P_1'$ falls on the bucket conveyor so that it is taken therefrom. (See Fig. 7). At that time, the following void bucket, in which the package container $P_1'$ was housed by means of being adsorbed, of the wheel 1 is in a position to give rise to adsorbing action, the subsequent package container $P_9$ on the bucket conveyor 3 is removed synchronously with the motion of said void bucket D' of the wheel and when said void bucket of the wheel reaches the above-mentioned lowest position, the package container $P_9$ is housed in said void bucket by means of being adsorbed thereto and the package container $P_1'$ which fell to be taken out at the prior process remains to be carried on the conveyor. (See Fig. 8). Since then, in a manner similar to the above-mentioned cases, the package container $P_2'$ falls to be taken out (see Fig. 9), package container $P_{10}$ is housed in the bucket D' by means of being adsorbed thereto, and the package container $P_3'$ at the side of the wheel falls to be taken out, such a flow of the process being successively repeated.

Next, the actuation which is made in setting adsorption action of the package container P to the bucket D of the bucket wheel 1 to ON/OFF may be described as follows:

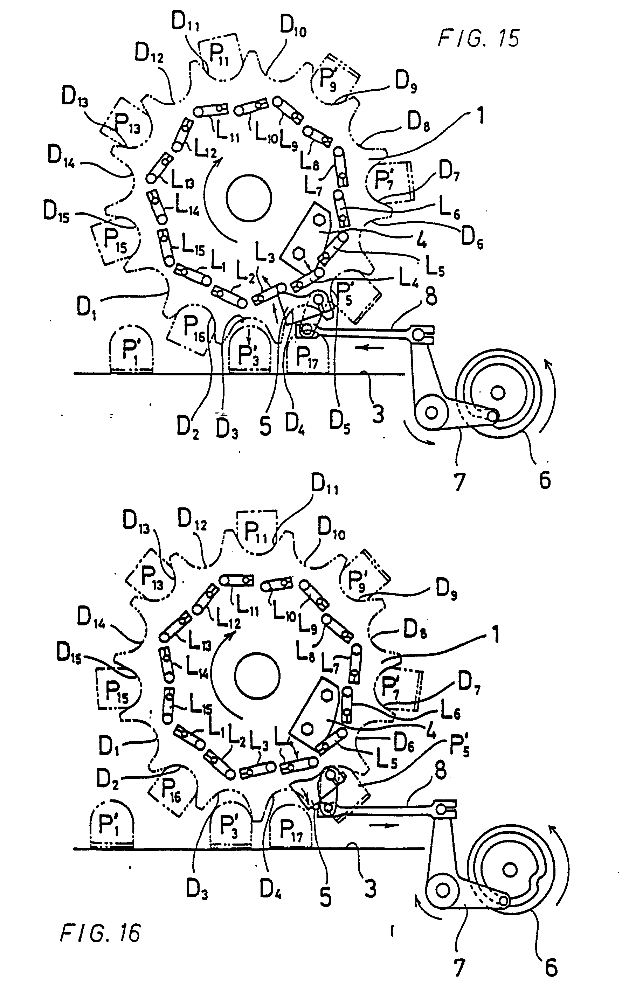

At the time of the situation, as shown in Fig. 13, wherein the valve transfer lever $L_1$ for the suction pipe of the bucket $D_1$ of the bucket wheel 1 is pushed to be moved by the movable cam 5, whereby said suction pipe is released from the suction action so that the package container is made free from the suction force, falling on the conveyor and commencing to be carried thereon, the suction pipe for the bucket $D_2$ of the wheel is in a position to give rise to the suction action by the corresponding process in which the valve transfer lever $L_2$ for the bucket $D_2$ is pushed to be moved by the fixed cam 4, whereas the movable cam 5, which has completed movement to push the valve transfer lever $L_1$ to be moved, is in a position to be withdrawn from the rotational locus of the actuating roller of the valve transfer lever $L_2$. Fig. 14 illustrates the situation in which the bucket wheel turns clockwise to be removed by 1/2 of the pitch between the buckets from the situation illustrated by Fig. 13. At the time the bucket $D_2$ of the bucket wheel 1, which reaches the position of housing the package container in the corresponding bucket, located near to the conveyor 3, commences to house the package container $P_{16}$, which is going to be carried, therein by means of adsorbing it and additionally the movable cam 5 is still withdrawn from the passage of the actuating roller of the valve transfer lever $L_2$. Furthermore, the valve transfer lever $L_3$ which maintains the bucket $D_3$ in the adsorbing state is not pushed to be moved but passes along the external periphery of the fixed cam 4. Fig. 15 illustrates the situation in which the bucket wheel turns clockwise to be removed by one pitch between the buckets from the situation shown by Fig. 14, the rotation of which adapts the valve transfer lever $L_3$ which keeps the suction pipe in the adsorbing state to push the actuating roller of said valve transfer lever $L_3$ to be moved by the corresponding process in which the movable cam 5 rotatively moves clockwise, whereby the bucket $D_3$ is released from the adsorption force of the suction pipe so that the package container $P_3'$ which was adsorbed to the bucket $D_3$ falls on the conveyor 3, commencing to be taken out. Subsequently, in response to the process that the valve transfer lever $L_4$ for the bucket $D_4$ which is kept in non-adsorbing state is pushed to be moved by the contact of the roller of said valve transfer lever $L_4$ with the fixed cam 4, the suction pipe of the bucket $D_4$ commences to give rise to the suction action. Fig. 16 illustrates the situation in which the bucket wheel turns clockwise to be removed by 1/2 of the pitch between the buckets from the situation shown by Fig. 15, i.e. the situation in which a two-pitch turn is made clockwise from the situation shown by Fig. 13; at that time the moveable cam is withdrawn from the state as shown in Fig. 15 and accompanied with carrying the package container $P_1'$ and $P_3'$, the suction pipe of the bucket $D_4$, maintaining the adsorption action, reaches the position right under the wheel, while the valve transfer lever $L_4$ for said bucket $D_4$ of the wheel 1 is not pushed to be moved by the movable lever $L_5$, so that the package container $P_{17}$ is housed in the bucket $D_4$ by means of being adsorbed thereto. Thus, the fixed cam 4 generally adapts the valve transfer lever L to lead its corresponding suction pipe into the adsorbing state, whereas the movable cam 5 can take out the package containers, which are transmitted one by one while being adsorbed to every other bucket of the bucket wheel 1, on the conveyor.

Since housing the package container, i.e. the object to be carried to the bucket of the bucket wheel, to be held in the bucket and taking it out of the wheel can be performed only by setting the suction action of the suction pipe of the bucket wheel to ON/OFF through the corresponding actuation of the fixed cam and the movable cam which are provided on the main body, the structure of the device may be simple enough not to need any electrical control such as a vacuum valve.

With regard to the bucket wheel possessing the bucket in odd number, the foregoing description of the preferred embodiment has put its focus on the arrangement in which the bucket wheel is maintained in a vertical state, but the present invention is not limited to such an arrangement and allows said wheel to be in a horizontal state so that the commodity to be carried is supplied thereto and taken out therefrom.

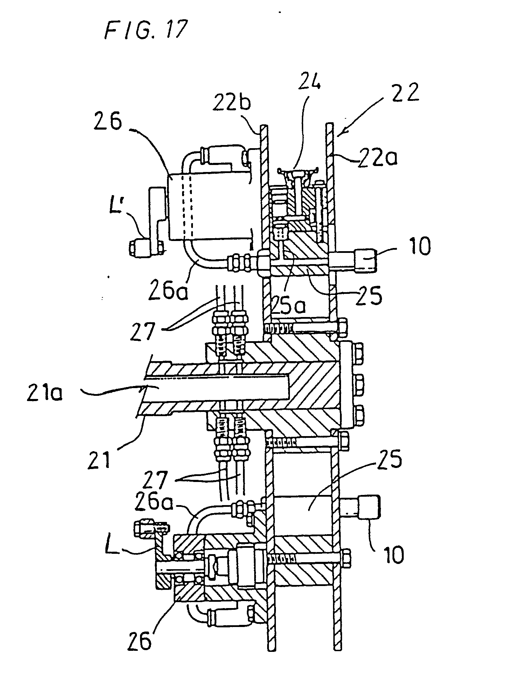

Fig. 17 is a longitudinal sectional view of the bucket wheel according to Fig. 11.

The peripheral part of the main body of the bucket wheel which is rotatively driven by the driving shaft 21 is equipped with a plurality of housing parts D (15 pcs. at uniform interval in the drawing) which fit the shape of the article to be conveyed. The suction pads are mounted on the bottom parts of said housing parts D, whereby the article to be conveyed are adsorbed to be held by said suction pads 24.

Between a face plate 22a of the main turret 22 and a back plate 22b of the main turret 22, which is formed by the face plate 22a and the back plate 22b, the suction pads 24 and the Venturi tubes 25 are inserted to be provided and a transfer valve 26 for setting the compressed air to ON/OFF is mounted on the back plate 22b of the main turret 22 so that these composite parts are united as one unit. A exhaust pipe 26a of the transfer valve is adapted to communicate with the Venturi tube, the vacuum circuit 25a of which is connected to the suction pads 24.

On the other hand, from the driving shaft 21 of the main turret 22, employing a pipelike shape, the compressor air is supplied to a plurality of transfer valves 26 through pipings 27. The air passage formed through the driving shaft 21 is connected to the optional compressed air source such as the compressor (not shown).

The transfer valves for the compressed air can be mechanically shifted by levers L, one example of which may be found in ON/OFF setting operations by cams 4 and 5 provided near to the main turret.

Additionally, the numeral 10 in the drawings is a silencer connected to each of the exhaust holes of the Venturi pipes 25.

The compressed air supplied from the air passage 21a through the driving shaft 21 passes through the pipings 27, reaching the transfer valves 26 so that it actuates the suction pads 24, utilizing the vacuum pressure generated by the Venturi tubes 25. In all of these composite parts, which are arranged on the main turret 22 under rotation, there are no relative sliding and movable parts except for the levers of the transfer valves.

According to the rotary adsorbing device of the present invention, since the supply of the compressed air and the utilization of the Venturi tubes cause the vacuum to be generated in each of the suction pads, inasmuch as the pressure of the compressed air is maintained at the constant level, even separate actuation of numerous suction pads does neither deteriorate the vacuum pressure of other suction pads nor give any other influence to them so that each of suction pads is stably actuated, maintaining a constant disposing capability. In particular, compared with the operation of maintaining the constant vacuum pressure by the vacuum pump, the present device is extremely easy to maintain the compressed air at the constant level.

In addition, according to the rotary adsorbing device of the present invention, the simple structure thereof does not possess any movable part, needing no precision valve mechanism for the electric accurate control which is indispensable to the operation by the vacuum pump, so there may be extremely few possibility of air leakage due to abrasion or other trouble. Therefore, no electrical parts exist therein; in addition to being washable, the external surface of the present unit reducing number of complicated undulations so that it is easy to clean. Such an example in which it is put into practical use for the mechanical device handling the food is sanitarily recommendable.

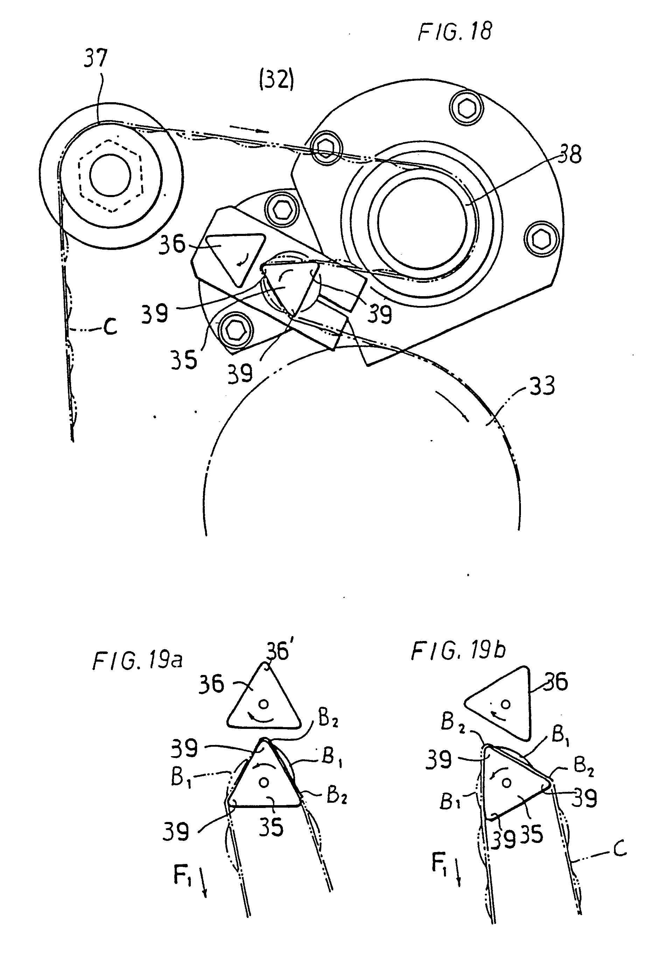

Fig. 18 shows the feeding device of the apparatus by means of which the continuous strip C of accessory articles e.g. of spoons, is supplied to a cutter mechanism 33. The package B containing the accessory article is delivered at the constant pitch E of the distance equivalent to the width of the package B when supplying the continuous strip to the cutter mechanism 33.

Conventionally, however, such a disadvantage as wide scatter of final cutting position has incurred, because errors in measurements, which are ascribed to small warpage of the pitch E originating from expansion and contraction of materials due to the change in temperature, the error in measurement at the production, and tensile elongation of materials, are gradually added together, while the long and narrow strip of continuous package C is maintained to be cut.

That is, when the cutting position unavoidably goes wide of the part B' to have been welded in widthwise direction of the long and narrow strip of continuous package C, each of the packages B is forced to be opened.

Fig. 18 is an enlarged view only of the feed device 32 constituting the spoon adhering machine as shown in Fig. 1. This feeding device 32 comprises the triangular-pillarlike rotatable member 35 and a rising preventive member 36 of triangular-pillarlike shape, provided near to the rotatable member 35, which turns in an opposite direction under synchronism with the rotatable member 35. Thus, the winding hang of the long and narrow strip of continuous package which is hung around guide rollers 37 and 38 over the rotatable member 35 is followed by the supply of the long and narrow strip of continuous package C to the cutter mechanism 33, which will perform the subsequent process.

The cutter mechanism 33 has its disc-shaped rotational blade pass across the long and narrow strip of continuous package C so as to cut the same, during the period of which the long and narrow strip of continuous package C is adapted to be suspended; in interlocking with the motion of the rotational blade of the cutter mechanism, the rotatable member 35 takes intermittently a rotational movement by one third of a complete turn per pitch, whereby the long and narrow strip of continuous package C is fed out by distance equivalent to the package B containing a spoon every one motion of the rotatable member 35.

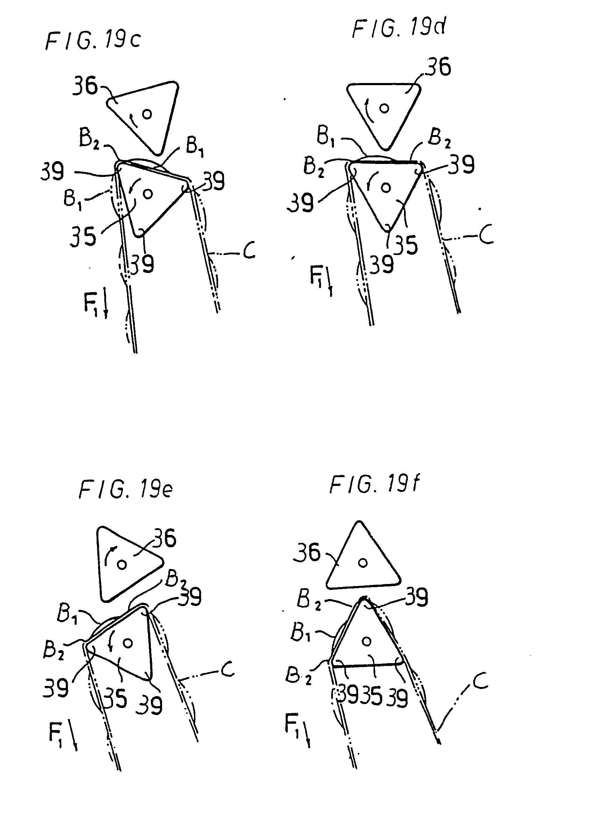

Next, the situation in which the long and narrow strip of continuous package C is fed out by means of the rotatable member 35 is described in conjunction with Fig. 19 as follows:

As shown in Fig. 19(a), the long and narrow strip of continuous package C which is windingly hung over the triangular-pillarlike rotatable member 35 is supported at its packaging part $B_1$ containing the spoon made of an unbending rigid body and its soft welded B' part just after the last packaging part $B_1$, i.e. its connected part $B_2$ by the ridge part 39 of the triangular pillar (shown as summit of triangle in the drawings). That is, the long and narrow strip of continuous package C which is being drawn by a constant tension $F_1$ is supported at its soft connected part $B_2$ by the ridge part of the rotatable member 35, being drawn forward while sliding on the ridge part thereof, and when the packaging part $B_1$ containing the rigid spoon is in contact with the ridge part thereof, the inability of the spoon to be bent produces a marked resistance so that the relative relationship between the long and narrow strip of continuous package C and the rotatable member 35 is corrected.

If the packaging part $B_1$ is extruded from the predetermined position, the tension $F_1$ is worked out to return it to the foregoing original position.

The rotatable member 35 commences to take a rotational motion from the state as shown in Fig. 19(a), passes through each of states as shown in Figs. 19(b), (c), (d) and (e), and reaches the state, as shown in Fig. 19(f), i.e. finishes to turn by 120°, feeding out the long and narrow strip of continuous package C by the distance equivalent to one package B so that the rotatable member 35 stops. With advance of the rotatable member 35 through the states as shown in Figs. 19(c), (d) and (e), a clearance between the feeding side of the long and narrow strip of continuous package C and the rotatable member 35 takes place. In other words, the angle at which the packaging part $B_1$ is bent by the ridge part is slackened and the packaging part $B_1$ rises so that it becomes easily slidable, but the rising preventive member 30 is actuated to prevent it from rising.

As for the rising preventive member 30, located near to the rotatable member 35, a stationary unit may be applicable thereto, only if it allows the rotatable member 35 to turn. A further alternative may adapt it to take a rotational motion synchronous with that of the rotatable member 35 so that the distance between the packaging part $B_1$ and the rising preventive member 30 is maintained to be as small as possible, thereby making the effect of preventing rise higher. It is, for example, possible to put a belt or roller for pushing (the packaging part $B_1$) into practical use as the preventive member.

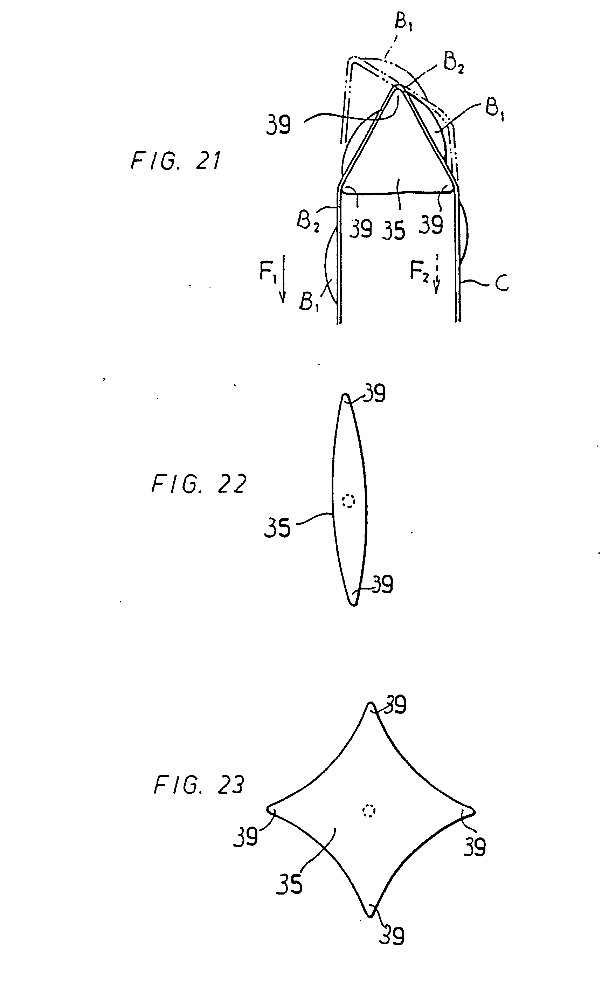

Variants such as a flat plate as shown in Fig. 22 or a polygonal pillar having more than three sides as shown in Fig. 23 may be applicable as the rotatable member 35, only if they meet the requirements that they should have a plurality of parallel ridge parts uniformly.

When the polygonal pillar having more than three sides is employed as the rotatable member 35, the package $B_1$ can be more easily slidable thereon, because the ridge part of the rotational article makes its internal angle obtuse. For this reason, as shown in Fig. 23, it is preferable to have its ridge part formed as acute angle by means of making a dent on the rotatable member 35. There is, however, still no alternative but to incur the slidability of the long and narrow strip of continuous package C on the rotatable member's ridge parts, adjacent to each other, between the parts of which the long and narrow strip of continuous package C is drawn.

From the view the triangular pillar is preferably applied to the rotatable member 35 and additionally the rising preventive member of the same shape is adapted to take the rotational motion synchronous with that of the rotatable member, thereby producing greater effectiveness.

The rising preventive member 36 is not always needed and as shown in Fig. 21 it is permissible to use the rotatable member 35 independently. Such a probability is based on the fact that the effects of correcting the position of the long and narrow strip of continuous package on the ridge part 39 of the rotatable member 35 is subjected to the correlation between the change in rigidity of the packaging part $B_1$ of the long and narrow strip of continuous package C and the connected part $B_2$ thereof and the tension $F_1$ and $F_2$. If one tension $F_1$ exceeds another tension $F_2$, as shown by an imaginary line in Fig. 21, the packaging part $B_1$ passes beyond the ridge part of the rotatable member 35 so that it rises, but when the difference between $F_1$ and $F_2$ is within the constant range, the foregoing fear can be avoided.

With regard to the tension $F_1$ and $F_2$, one of which may be increased compared with another, if the tension $F_1$ working in the advance direction is increased, the standard for correcting the position is set to the front end of the packaging part, whereas if the tension $F_2$ working in the similar direction or in the incoming direction is increased, the standard therefore is set to the rear end of the packaging part $B_1$.

An alteration from the embodiment illustrated in the drawing, wherein the length of one side of the triangular pillar is approximately equal to the measurements E per one piece of package B, may be made in a manner that the length of one side of the triangular pillar equals the measurements of more than two pieces of packages B so that the angle at which the rotatable member 35 takes the rotational motion is decreased. Furthermore, a practical use of the rotatable member 35 may be applied to feed-out a plurality of package as a unit.

Notice ought to be taken of the necessity that there shall be a change in rigidity between the packaging part of the long and narrow strip of continuous package and the connected part thereof so that the present invention may be put into practical use.

When there is a warpage in the position into which the long and narrow strip of continuous package is fed out in response to the subsequent process, or when the primary position, into which the long and narrow strip of continuous package is first fed out, is necessary to be established, proper adjustment may be made by changing the starting position (phase) only of the rotatable member interlocked with the subsequent process.

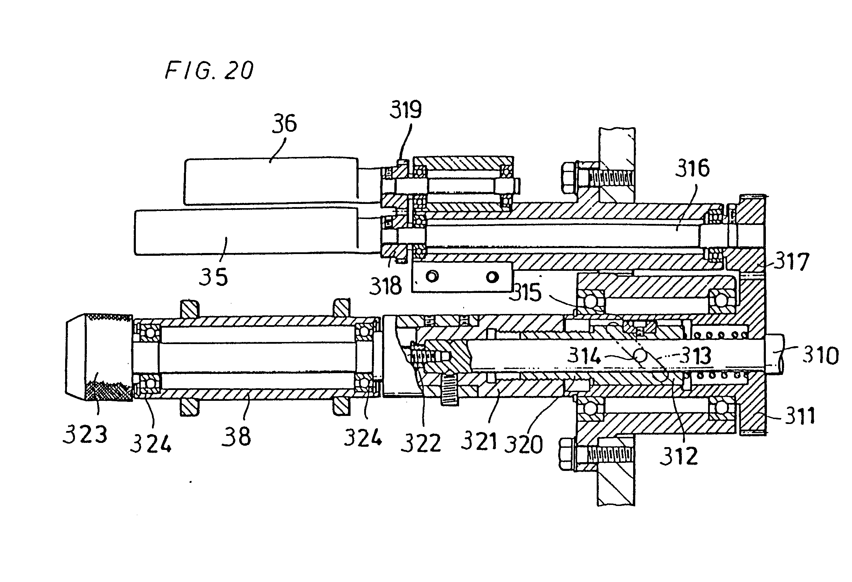

Next, one example of adjusting the phase is described in conjunction with Fig. 20 as follows:

A gear 311 and a sleeve 312 are freely fit on a driving shaft 310 interlocked with the cutter mechanism subsequently performing the next process, a long hole 313 is inserted into the sleeve 312 in an oblique (spiral) direction, and a pin 314 projecting from the driving shaft 310 is fit in said long hole 313. Then, the interlocking between the sleeve 312 and the gear 311 is made by a key 315.

Such a fabrication transmits a turn of the driving shaft 310 to the sleeve 312 by means of the pin 314 and from the sleeve 312 it is transmitted to the gear 311 by the transmission caused by the key 315. Together with the gear 311 on the driving shaft being in mesh with the gear 317 on the shaft 316 of the rotational device 35, another group of gears 318 and 319 synchronizes the rotational motion of the rotatable member 35 with that of the rising preventive member 36.

A female screw 321 threaded on a male screw 320 which is provided at the front edge of the sleeve 312 is mounted on the driving shaft 310 by small screw 322. That means that female screw 321, rotatable, is set not to freely move axially.

For this reason, in order to change phase of the rotatable member 35, a knob 323 united with the female screw 321 as one unit is turned, whereby the sleeve 312 threaded into said knob 323 moves forward and backward. Since the sleeve 312 and the driving shaft 310 are engaged with spiral-shaped long hole by the pin 314, the relative rotational position between the driving shaft 310 and the sleeve 312, i.e. the phase between the rotatable member 35 and the driving shaft 310, is correspondingly changed.

According to the feed-device of the long and narrow strip of continuous package of the present invention, because there is the possibility of accurately feeding out the package to the subsequent process with the number of packages or other articles having rigidity applied as standard for working process, even if the pitch between packages of the long and narrow strip of continuous package is forced to be altered due to the error in their production and the change in temperature, no warpage in feeding number takes place.

The illustrated embodiment, wherein the long and narrow strip of continuous package is cut into small units of packages, may make it needless to fear that the goods of inferior quality will be produced by reason of the cutting position going wide of the welded part by mistake.

The foregoing embodiment, wherein the rising preventive member is combined with the feed-device, adapts the rising preventive member to be stably and accurately actuated.

If an adjustment of the phase between the rotational position of the rotatable member and the interlocking of the rotatable member with the subsequent process is adapted to be possible, the feed-device of the long and narrow strip of continuous package according to the present invention can be put into practical use for various kinds of packages, when the width of the package, i.e. the pitch of the long and narrow strip of continuous package is different to the extent within the range where such a difference can be absorbed by the slide of the rotatable member.

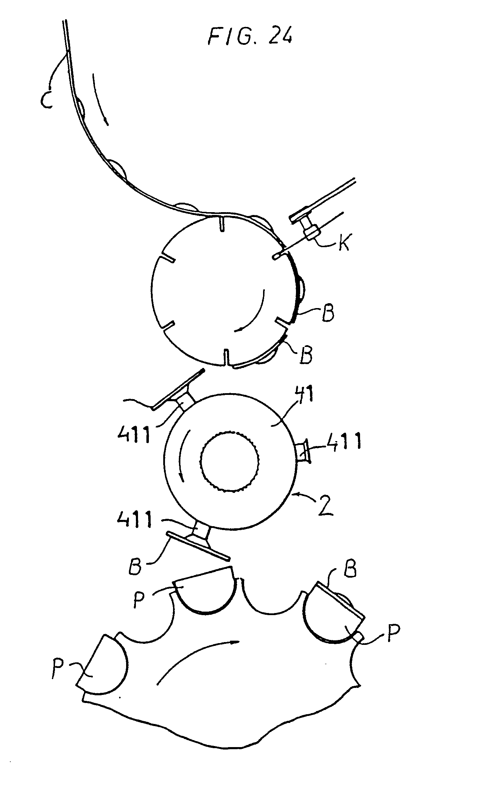

Figs. 24 to 26 show a transfer drum for transmitting accessory articles, e.g. spoons from a cutting device to the attaching station.

According to Fig. 24 the continuous strip C is fed to the cutting device where it is cut into separate bags B of accessory articles. These single packages B are transported by means of the transfer drum 41 to the bucket wheel 1 where they are adhered to articles P contained in the buckets of the wheel 1.

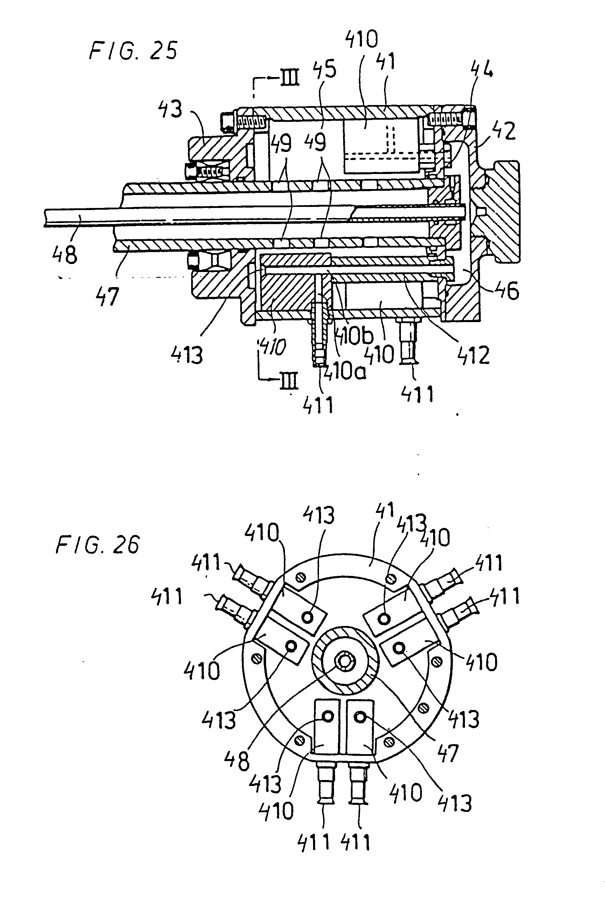

Fig. 25 shows a longitudinal sectional view of the transfer drum 41.

As for this kind of transfer drum it is ordinary that a plurality of suction pipes which are fixed to a rotational device are connected to one vacuum source.

In order to maintain the constant vacuum pressure, however, higher airtight conditions must be kept. In other words, since slight air leakage extremely deteriorates the vacuum pressure, in the first place, there is a necessity of mounting a passage or a joint, highly airtight, on a rotary mechanism and furthermore, it is needed to completely close other suction pipes except for the suction pipes performing the adsorption process, because the air leakage from one suction pipe, if any, has a considerable impact upon other pipes. For this reason, the vacuum mechanism of the past, which has been forced to include a movable part, has its structure formed so complicated that trouble may be caused by such a complexity.

Fig. 25 shows a transfer drum which not only can obtain a stable vacuum pressure without being influenced by the air leakage by using high pressure air source the change in pressure of which is not comparatively subject to the air leakage and a Venturi tube which can produce a vacuum (negative pressure) state by the high pressure air but also reduce any probability of trouble as much as possible by means of making the movable part smaller.

While a rotational device 41 which is rotatively driven is of a cylinder and hollow in its inside by means of closing tight both its ends with lid bodies 42 and 43, the inside is divided into a void chamber 45 and a pressure chamber 46 which is air-tight by a partition wall 44. Double lines, internal and external, of exhaust pipe 47 and air pipe 48 are inserted along the rotary shaft line of the rotational article 41 so that the exhaust pipe 47 and the air pipe have openings to the void chamber 45 and the pressure chamber 46, respectively.

Although the illustrated embodiment has the exhaust pipe 47 fixed to the rotational device 41 so that the exhaust pipe 47 serves also for the driving shaft at the same time, an alternative is to equip the rotational article with a separate driving device and to make the exhaust pipe be a fixed shaft.

A further alternative may have the end of the exhaust pipe 47 opened to the void chamber 45, although in the preferred embodiment the exhaust pipe 47 penetrates the void chamber, a plurality of vent holes being adequately mounted thereon.

A plurality of Venturi tubes 410 which are fixed in the void chamber 45, are adapted to communicate with the suction pipe 411 having a vacuum generating circuit 410a thereof extruded outwardly and at the same time a pressure circuit 410b is adapted to communicate with the pressure chamber 46 by means of a connected pipe 412.

Next, the focus of the description is shifted toward the actuation of the vacuum adsorbing device incorporated into the transmission drum according to the present invention:

The high pressure air, which is supplied from the high pressure air source such as a compressor (not shown) and others, passes through the air pipe 48 and reaches the inside of the pressure chamber. From the pressure chamber 46, the high pressure air 48 passes through the connecting pipe 412 and is supplied to Venturi pipes 410, whereby the vacuum pressure, constantly stabilized, is generated in the suction pipe 411, subsequently being discharged from an exhaust hole 413 of the Venturi tube 410 to the void chamber 45, passing through the vent hole 49 and being discharged out of the machine by means of the exhaust pipe 47.

At that time, if the pressure chamber 46, being void, has a larger capacity than predetermined, the pressure chamber serves as a tank so that the air of stabilized pressure can be supplied to each of the Venturi tubes, even when there occurs fluctuation in the air consumption amount due to the supply of pulsing high pressure air as well as to the air leakage, whereby the suction force of the suction pipe 411 is constantly maintained.

According to the vacuum adsorbing device incorporated into the transfer drum of the present invention, regardless of the air leakage from one of a plurality of suction pipes, if any, as well as any actuation of other suction pipes.

Since the air can always ventilate a plurality of Venturi tubes, the movable parts such as a valve mechanism which is accurately actuated are not needed, although the conventional type utilizing the vacuum air source needs them, thereby producing the effects of reducing the probability of trouble as much as possible.

Furthermore, compared with the conventional adsorbing device using the vacuum source, the adsorbing device of the present invention compensates higher running cost for maintaining a constant high degree of vacuum with a comparatively economical obtainability of the high pressure air by the compressor, etc., and additionally reduce the necessity of repair so that it has a marked characteristic of maintaining all its parts at low running cost.

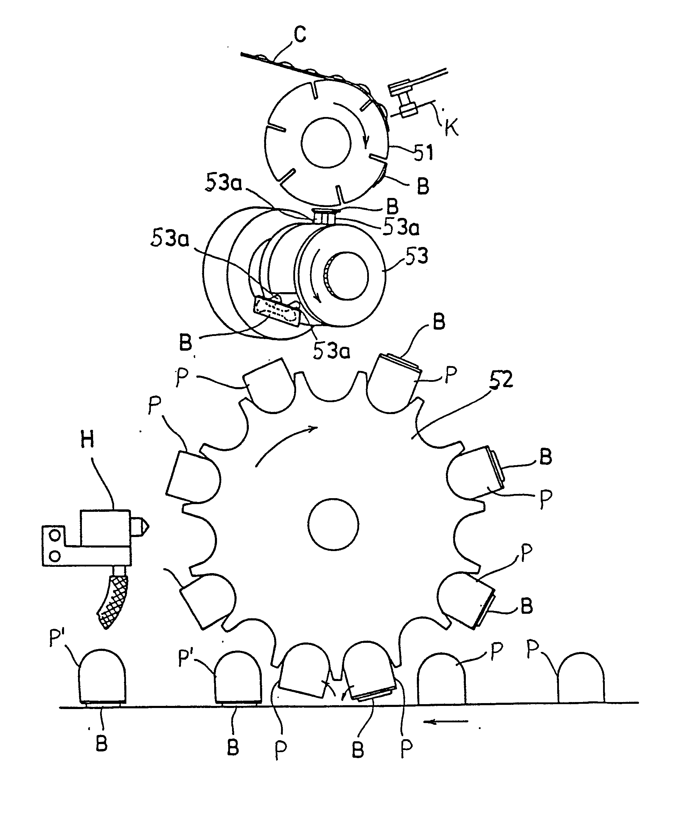

Fig. 27 shows a further embodiment of a transfer drum by means of which the accessory article can be transferred to the packaging container and can be obliquely adhered thereto.

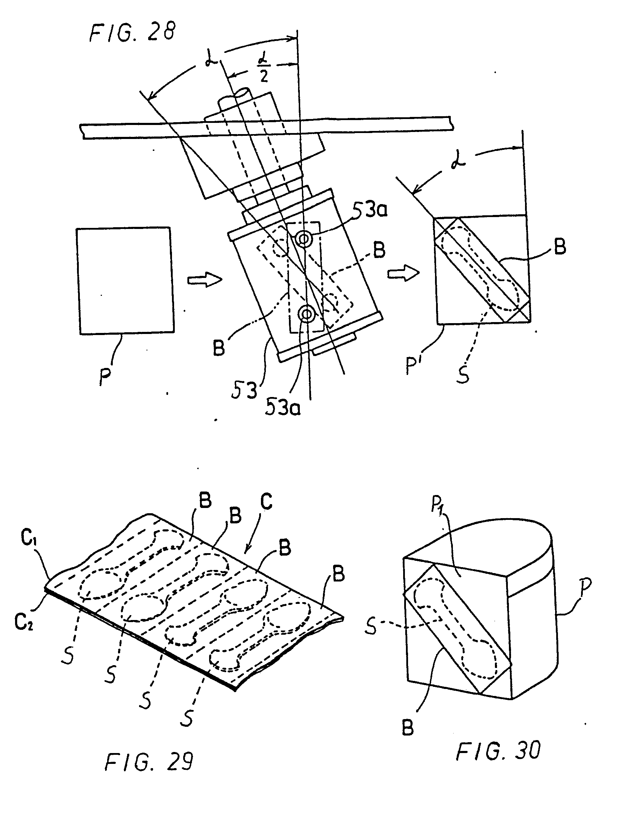

In the drawing the symbol C is a long and narrow strip of continuous package comprising two sheets of synthetic resin film $C_1$ and $C_2$ through the clearance of which the spoons are, as shown in Fig. 29, inserted so that the prescribed parts of these films are welded, thereby containing the spoons S adapted to be conveyed at a pitch equivalent to the small bag, while being sucked from a feed correcting device (not shown) to a package supplementing drum 51 which turns clockwise intermittently. K is a cutter for separating the small bag B from the long and narrow strip of continuous package C at every pitch. 1 is a bucket wheel for conveying the food packaging container P as shown in Fig. 30 to the position at which the small bag B containing the spoon is adhered to said container P, its rotating shafts, upper and lower, which are parallel with the driving shaft of the above-mentioned package supplementing drum 51 in front of a base plate, rotating clockwise.

This bucket wheel 1, possessing parts (buckets) for receiving the packaging container in odd number, adsorbs successively the packaging containers one by one, when they are conveyed under the bucket wheel 1 by a conveyor, reaching just below the bucket wheel, and after that is rotated, the adsorption of them being released at the location of having performed the corresponding last adsorption so that they are to be successively discharged on the conveyor.

In the area at the side part of the bucket wheel 1 and more specifically the part fronting the passage along which the packaging container rotatively passes, a hot melt gun H for spraying hot melt adhesive to the side face of the packaging container is provided.

After the packaging container P is adsorbed on the part (bucket) for receiving the packaging container P of the bucket wheel 1, during the intermediate course through which the packaging container P reaches the upper adhering position of the small bag containing the spoon by means of the clockwise rotation of the bucket wheel 1, the hot melt adhesive is sprayed to the side face $P_1$ of the packaging container P by the hot melt gun H, and subsequently the small bag containing the spoon which is transferred down by a drum for transferring package 53, referred to in the below part, which is provided obliquely with regard to the base plate and between the package supplementing drum 51 and the bucket wheel 1, is in contact with the packaging container P so that said small bag is shifted to be adhered to the side face of the packaging container P.

The drum for transferring package 53, provided between the package supplementing drum 51 and the bucket wheel 1, which is rotated synchronously with both the units so as to change the direction of the small bag, has the direction of its rotating shaft made an inclination equal to 1/2 of the inclining angle $\alpha$, at which the small bag B is adhered obliquely on the diagonal direction of the side face $P_1$ of the packaging container P, as shown in Fig. 28, with regard to the axial directions of both two axes of the above-mentioned package supplementing drum 51 and the bucket wheel 1, on the flat face parallel with these two axes. A pair of suction pipes 53a are provided at the locations which divide the external periphery of the drum for transferring package 53 into three equal parts in a manner that their inclining angle with regard to the shaft of said drum for transferring package 53 becomes 1/2 $\alpha$ so that they may fall in line with the surface including the axial line of the above-mentioned package supplementing drum 51 and the bucket wheel 1, when they move upward. The adsorbing force of the package supplementing drum 51 is smaller than that of the above-mentioned suction pipe 53a.

Next, the actuation of the device which carries out the present invention will be described af follows:

As shown in Fig. 27, the long and narrow strip of package C, in which the small bag B containing the spoon is packed, is adsorbed its end by the external periphery of the package supplementing drum 51, having numerous suction holes on its surface, which intermittently rotates clockwise and, while having its feed-pitch corrected by the feed correcting device (not shown), it is fed one pitch by the external peripheral part of the package supplementing drum 51 whose peripheral speed is more rapid than the feeding speed of the long and narrow strip of package C so that after reaching the predetermined position, the small bag B contained therein is cut out and subsequently each of the cut bags is carried downward by the rotation of the package supplementing drum 51. When the small bag B reaches the lower end, the suction pipes 53a for adsorbing said small bag provided at the locations, which divide the external periphery of the drum for transferring the package under rotation in synchronism with the package supplementing drum 51 into three equal parts, reaches the upper end of its rotating locus, i.e. the small bag shifting position. At that time since the adsorbing force of the package supplementing drum 51 against the small bag B is smaller than that of the suction pipe 53a of the drum for transferring the small bag 53, the small bag B is taken away from the package supplementing drum 51 and is adsorbed on the suction pipe 53a of the drum for transferring package 53.

The small bag B which was adsorbed on the suction pipe 53a then reaches the position at the bottom edge when the drum for transferring the package completes a 180° rotation so that the small bag B inclines, as shown in Fig. 28, by $\alpha/2 \times 2 = \alpha$ for the primary position of adsorbing it, i.e. by the inclining angle $\alpha$ on the side face $P_1$ of the package container P.

On the other hand the package container P is adsorbed from the conveyor to the bucket of the bucket wheel 1, moves rotatively upward, during the intermediate course of which the hot melt adhesive is sprayed on the side face $P_1$ of the package container P by the hot melt gun H and subsequently when the small bag B which was adsorbed on the suction pipe reaches the bottom edge, the package container P comes up to the top of its rotating locus so that the side face $P_1$ of the package container P and the small bag B are contacted to each other, whereby the small bag B is taken away from the suction pipe 53a by the adhesive on the package container, being transferred to be adhered to the package container P. That is, the small bag B is adhered obliquely on the diagonal of the side face $P_1$ of the package container P. At that time it is preferable to perform steadily the adhesion by a counter member which presses the small bag B, while moving in synchronism with the motion of the small bag.

Thus, the package container P to which the small bag B is adhered is conveyed downward, while being still adsorbed to the bucket of the bucket wheel 1, reaching the lowest position, and the condition in which the package container is adsorbed to the suction pipe is released, subsequently the package container being conveyed along the conveyor after having falled thereon.

As clearly described above, since the method of the present invention can continuously adhere the small bag B obliquely to the package container P only by means of making an inclination by 1/2 of $\alpha$ at which the small bag B is adhered to the package container P in providing the drum for transferring package 53, which transfers the bag B to the package container P, between the package supplementing drum 51 and the bucket wheel 1 for forwarding the package container, the device which takes a complicated motion to adhere the small bag obliquely to the package container is not needed and there are possibilities not only of making the formation of the surface flat only with the necessity of arranging the rotational article on one surface but of realizing the structure which is in a solid state.

For this reason since one surface of the base plate can be used for the place where the food is handled, whereas another surface (back surface) thereof is formed to serve as driving part, the method according to the present invention has an advantage of being easy to form so that its part for handling the food may be washable. Further effect of the device is to increase the disposing speed, because the adhering mechanism simply comprises rotational motion.

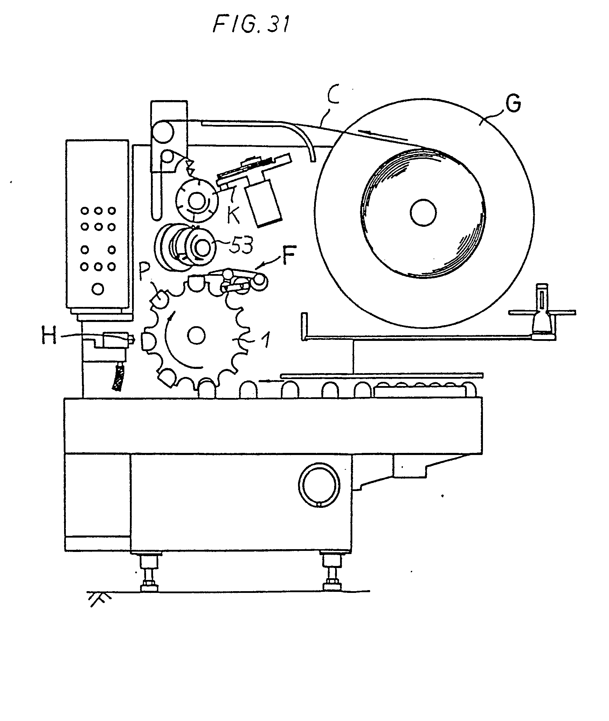

Fig. 31 shows the apparatus according to the invention using the transmission device of Fig. 27.

The continuous packages which are taken up around a reel, are kept to be drawn out in succession as shown in Fig. 31, during the process of which they are cut out into each of packages B by the cutter K, and this package B is transmitted by the transfer drum 53. On the other hand, under this transfer drum 53, the package container P is fed out by the rotation of the bucket wheel 1. At the position where the package container P faces up to the package B, the package B is adhered to the package container P.

During the conveyance caused by the rotation of the bucket wheel 1, hot melt adhesive has been already applied to the external face of the package container P by adhesive applicator H, the package B being pressed against said applied adhesive, whereby the adhering process is much more facilitated.

The package contact-bonding device F is provided at this adhering position which is sandwiched by the transfer drum 53 and the bucket wheel 1.

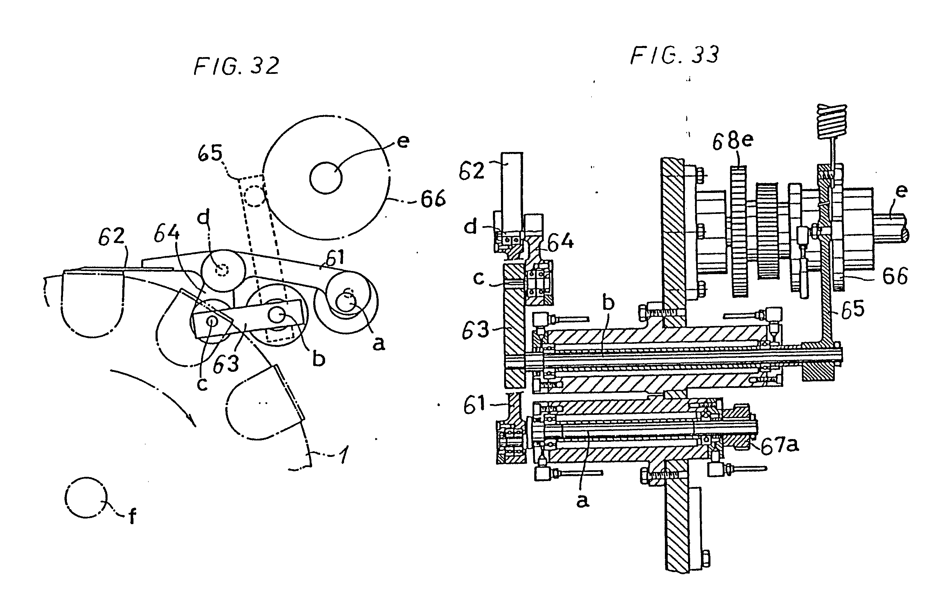

This package contact-bonding device F is, as shown in Figs. 32 and 33, basically constituted by an actuating article 61 which is provided eccentrically with regard to a shaft a and a pusher plate 62 mounted on the top end of said actuating article 61.

Except for this shaft a, the shaft b and c, which are in parallel with each other, are provided, one lever 63 being laid over the distance between these shafts b and c. The end of another lever 64 is freely mounted on the shaft c, the top end of said lever 64 being freely mounted on the shaft d provided on the top end of the above-mentioned actuating article 61.

A cam lever 65 is firmly mounted on the above-mentioned shaft b, while being opposite to the fixing position of the lever 63, said cam lever 65 adapting its end to be in mesh with the cam 66 provided on the shaft e other than the above-mentioned shafts a to d.

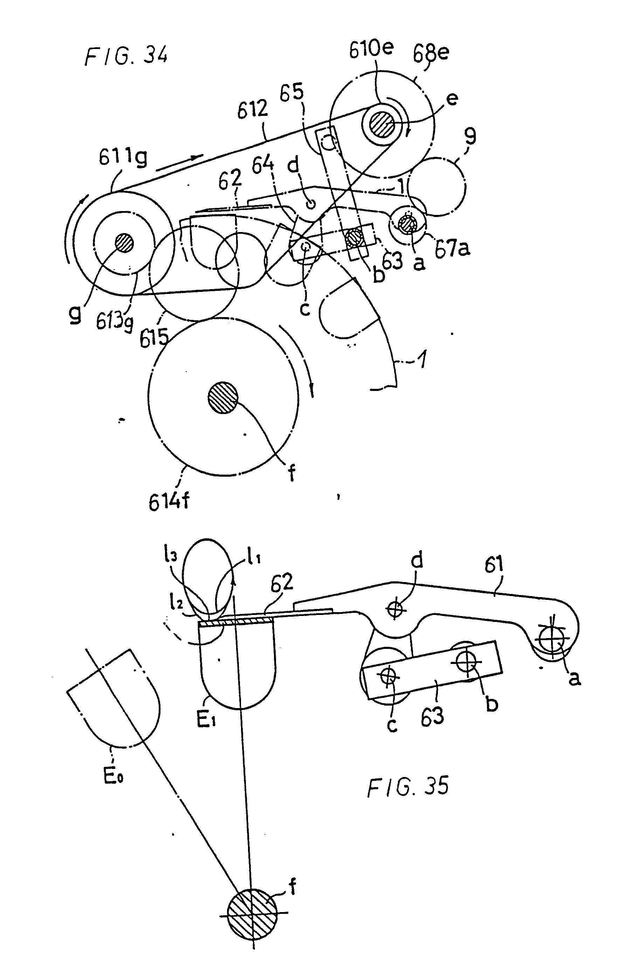

The shafts a and e and the shaft f of the bucket wheel 1 are interlocked with each other. As one example of such an arrangement, as shown in Fig. 34, it is exemplified that a gear 67a is firmly mounted on the shaft a, said gear 67a is engaged through the intermediate gear 69 with the gear 68e firmly mounted on the shaft e, the shaft e is firmly equipped with the wheel 610e, one belt is hung between said wheel 610e and the wheel 611g firmly mounted on the shaft g which is provided near to the shaft f, the gear 613g is firmly mounted on the shaft g and said gear 613g is engaged through the intermediate gear 615 with the gear 614f firmly mounted on the shaft f.

The foregoing composition adapts the shaft a to take a rotational motion clockwise of Fig. 34 in interlocking with a rotational motion in arrow direction of the same drawing of the shaft f of the bucket wheel 1 so that the actuating unit 61 takes an eccentric motion.

On the other hand, the rotational motion in arrow direction of Fig. 34 (clockwise) causes the cam 66 firmly mounted on the shaft 3 to take a rotational motion and the cam lever 65 engaged with said cam 66 is vibratingly moved with the shaft b being a center.

In response to this motion, the shaft b takes a rotational motion clockwise or counterclockwise of Fig. 34, the lever 63 firmly mounted on said shaft b and the lever 64 laid between the shaft c on the top end of said lever 63 and the shaft d on the top side of the actuating article 61 are interlocked with each other, the interactive motion of which actuates the pusher plate 62 fixed to the top end of the actuating article 61. Therefore, said pusher plate 62 is adapted to describe such a locus as shown in Fig. 35.

The length of the circumference of this locus is obtained by dividing by an integral number the interval between the package container shown by chain line $E_0$ of Fig. 35 on the circumference of the bucket wheel and the package container shown by the full line $E_1$ of the same figure, in other words, the interval between the adhering work by the bucket wheel 1. Such a length intends to reduce the working range of the pusher plate 62 as much as possible.

Since the pusher plate 62, which always continues to be actuated, does not need to perform the adhering work, when the package container which is fed out by the rotation of the bucket wheel 1 is located at the position shown by the chain line $E_0$ of Fig. 35, the pusher plate 62 is adapted to describe the locus $l_1$ and not to be in contact with the external periphery thereof. Since there is a necessity of performing the adhering work, when the package container is located at the position shown by the full line $E_1$ of Fig. 35, the pusher plate 62 is adapted to describe locus $l_2$ and to be in contact with the external periphery of the bucket wheel 1, pressing the external end face of the package container P. At that case approximately horizontal straight line part $l_3$ is adapted to exist in a manner of appearing on the part of the locus $l_2$. Such arrangement intends to actuate the pusher plate 62 in tangential direction of the bucket wheel 1. Furthermore, the pusher plate 62 is adapted to be actuated at the speed approximately identical to the peripheral velocity of the bucket wheel 1.

Thus, when it is not needed to perform the adhering work, the pusher plate 62 is adapted to be actuated without being in contact with the external periphery of the bucket wheel 1, whereas when it is needed to perform the adhering work, the pusher plate 62 may be adapted to act as the contact-bonding device. At that time the actuating direction of the pusher plate 62 is the tangential one of the bucket wheel 1 and its speed is made approximately identical to the peripheral velocity of the bucket wheel 1.

If the arrangement is made as stated above, when housing the package container P in the receiving part provided on the external periphery of the bucket wheel 1 and adhering the package B to the package container P, while rotating the bucket wheel 1, the package put on the package container P is contact-bonded to the package container P which is under removal without being scrubbed by the above-mentioned pusher plate 62. In other words, since the pusher plate 62 takes such a special motion as stated above, the pressing position of the pusher plate 62 against the package B, i.e. the actuating point of the pusher plate 62 does not slip in spite of the motion of the package container P. For this reason, the pusher plate 62 performs pressing process without scrubbing the package B.

According to the present invention, without using any complicated electric signal, only a mechanical combination causes the pusher plate 62 and the rotational unit to be synchronous with each other with extreme simplicity.

Since the pusher plate 62 is actuated in the tangential direction of the rotational unit and at the same time is actuated at the speed approximately identical to the peripheral velocity of the rotational unit, the state of adhering the article to be adhered is stable, and derailing of the article to be adhered out of the package container does not take place.

Furthermore, since it is possible to minimize the actuating range of the pusher plate 62, the installation of the present device may be performed at the place where the space available is extremely limited, all the measurements of the adhering device being able to be made as small as possible.

Although the foregoing embodiment has described the case of adhering the article to be adhered to the package container, the application of the present invention is not limited to such a case, but it may be practically used for adhering the article to be adhered to goods other than the package container.

**Claims**

1. An apparatus for applying accessory articles to objects conveyed in equidistant succession on a conveyor, comprising a feeding device (32) for feeding a continuous strip (C) of accessory articles (B), cutting means (K) for separating the accessory articles from said strip, and transfer means comprising a rotatable transfer drum (41, 53) with holders (411, 53a) for transferring the separated accessory articles from said cutting means to a location where they are adhesively attached to said objects (P), characterized in that it comprises a revolving holding device (1) having an odd number of equidistant holders (D) and rotating in synchronism with the conveyor (3) for taking the objects (P) from the conveyor (3), moving them along a circular path and replacing them on the conveyor (3); that said transfer drum (41, 53) cooperates with said revolving holding device (1) for applying the accessory articles (B) to the objects (P) carried by said revolving holding device (1) at a position remote from the conveyor (3); and that said feeding device comprises a rotatable member (35) having a plurality of parallel ridge parts (39) for engaging the continuous strip (C) of accessory articles (B) at the position between the articles (B), the movements of said rotatable member (35), rotatable drum (2) and revolving holding device (1) being synchronized with each other.

2. Apparatus according to claim 1, characterized in that said holders (D) are compartments provided with suction holes or suction cups connected to a vacuum source, that said revolving holding device (1) and said conveyor (3) are synchronized in such a way that every second holding compartment (D) for an object (P) will coincide with an object (P) brought forward on the conveyor (3).

3. Apparatus according to claim 1, characterized in that said transfer drum (2) is adapted to rotate about an axis inclined with respect to the axis of said revolving holding device (1) and that said holders (411) are vacuum holding means for holding the articles (B) during the transfer and positioning operation.

4. Apparatus according to claim 1 or 2, characterized in that the gap between the objects (P) transported on said conveyor (3) is twice the distance between the holders (D) of the revolving holding device (1), and the revolving holding device (1) will position the object (P') after treatment in the middle of the gap between succeeding objects (P) on said conveyor (3).

5. Apparatus according to claim 2, characterized in that each of said compartments (D) is equipped with a suction pipe (N) having its valve opened/closed by a valve actuating lever (L) and that the conveyor (3) is provided with object holders passing under said revolving holding device (1) or carrier wheel, the pitch between the object holders of the conveyor (3) being double the width of that between the compartments (D) of the carrier wheel (1), these two groups of object holders and compartments (D) being moved synchronous with each other so that the carrier wheel and the conveyor (3) will simultaneously reach the position at which they will coincide and that a fixed cam (4) and a movable cam (5) are provided on the main body of the apparatus in order to control the position of an actuating roller (L') located on said valve actuating lever (L), in such a way that the fixed cam (4) pushes the valve actuating lever (L) to be moved so that the corresponding compartment (D) of the carrier wheel (1) will hold the object (P) to be carried by means of vacuum whereas the movable cam (5) in synchronism with the rotation of the carrier wheel (1) moves to an active position once every second pitch passage of a compartment (D) of the carrier wheel (1) and when the compartment of the carrier wheel (1) reaches the said position at which it is close to the object conveyor (3), the movable cam (5) pushes the valve actuating lever (L) to be moved, whereby the object (P') to be carried is released from suction force and delivered to the conveyor (3).

6. Apparatus according to claim 2 or 5, characterized in that each of said suction holes or suction cups is connected to a vacuum source by means of a connecting device comprising a plurality of Venturi tubes (25) and a plurality of valves for connecting or disconnecting compressed air to said Venturi tubes (25), said valves being located on the external periphery of the carrier wheel (1) and that a hollow driving shaft (21) is provided which is connected to a supply of compressed air, which is supplied from the insides of said hollow driving shaft (21) to said transfer valves.

7. Apparatus according to claim 1, characterized in that said feeding device is provided with a rising preventive member (36) in the form of a rotatable member of mainly the same shape as the rotatable feeding device and located near to said rotatable member (35) of the feeding device.

8. Apparatus as claimed in claim 7, characterized in that said rotatable member (35) of the feeding device has a triangular cross-section.

9. Apparatus as claimed in claim 7 or 8, characterized in that the rising preventive member (36) is rotated in synchronism with the rotatable member (35) of the feeding device.

10. Apparatus in accordance with claim 1, characterized in that said transfer drum (41) being provided with a vacuum holding device comprising a void chamber (45) and a pressure chamber (46), which chambers are separated by a separating wall (44), said void chamber (45) being equipped at its inside with a plurality of vacuum generating Venturi tubes (410) each communicating with a suction pipe (411), said pressure chamber (46) being connected to an air pipe (418) for supplying pressurized air and a pressure chamber being connected to the chamber of said Venturi tubes (410).

11. Apparatus according to claim 3, characterized in that the angle of inclination between the axis of said transfer drum (41) and the axis of said revolving holding device (1) is half the predetermined angle between the accessory articles (B) and the object (P) on which the articles are intended to be sealed.

12. Apparatus according to claim 1, characterized in that the transfer device includes a pusher plate (62), which is adapted to make a combined movement including a circular movement in synchronism with the movement of said carrier wheel (1) and a movement in a direction tangential to said carrier wheel (1).

**Patentansprüche**

1. Gerät zum Aufbringen von Zusatzteilen auf Werkstücken, die an gleichbeabstandeter Folge auf einem Förderer gefördert werden, mit einer Zuführeinrichtung (32) zum Zuführen eines kontinuierlichen Streifens (C) von Zusatzteilen (B), einer Schneidvorrichtung (K) zum Abtrennen der Zusatzteile vom Streifen und einer Übertragungsvorrichtung mit einer drehbaren Transfertrommel (41, 53) mit Haltern (411, 53a) zum Übertragen der durch die Schneidvorrichtung getrennten Zusatzteile zu einem Platz, wo sie anhaftend auf den Werkstücken (P) befestigt werden, dadurch gekennzeichnet, daß es aufweist eine Umlaufhaltevorrichtung (1) mit einer ungeraden Anzahl von gleichbeabstandeten Haltern (D), welche synchron zum Förderer (3) rotiert, um die Werkstücke (P) vom Förderer (3) zu nehmen, diese entlang eines kreisförmigen Weges zu bewegen und sie wieder auf dem Förderer (3) abzustellen; daß die Übertragungstrommel (41, 53) mit dem Umlaufhaltevorrichtung (1) zusammenwirkt, um die Zusatzteile (B) auf den Werkstücken (P), die von der Umlaufhaltevorrichtung (1) getragen werden an einer vom Förderer (3) entfernten Stelle aufzubringen; und daß die Zuführvorrichtung ein Drehteil (35) aufweist mit einer Vielzahl von parallelen Gratteilen (39) zum Eingreifen in den durchgehenden Streifen (C) der Zusatzteile (B) an einer Stelle zwischen den Teilen (B), wobei die Bewegung des Drehteils (35), der Rotationstrommel (2) und der Umlaufhaltevorrichtung (1) miteinander synchronisiert sind.

2. Gerät nach Anspruch 1, dadurch gekennzeichnet, daß die Halter (D) Abteile sind mit Sauglöchern oder Saugnäpfen, die mit einer Vakuumquelle verbunden sind, daß die Umlaufhaltevorrichtung (1) und der Förderer (3) so synchronisiert sind, daß jedes zweite Halteabteil (D) für ein Werkstück (P) mit einem auf dem Förderer (3) vorwärts gebrachten Werkstück (P) zusammenfällt.

3. Gerät nach Anspruch 1, dadurch gekennzeichnet, daß die Übertragungstrommel (2) um eine Achse rotieren kann, die bezüglich der Achse der Umlaufhaltevorrichtung (1) geneigt ist, und daß die Halter (411) Vakuumhaltevorrichtungen sind zum Halten der Teile (B) während der Übertragung und Ausrichtung.

4. Gerät nach Anspruch 1 oder 2, dadurch gekennzeichnet, daß der Spalt zwischen den Werkstücken (P), die auf dem Förderer (3) transportiert werden, zweimal der Abstand zwischen den Haltern (D) der Umlaufhaltevorrichtung (1) ist und daß die Umlaufhaltevorrichtung (1) die Werkstücke (P') nach der Behandlung in der Mitte des Spaltes zwischen aufeinanderfolgenden Werkstücken (P) auf dem Förderer (3) absetzt.

5. Gerät nach Anspruch 2, dadurch gekennzeichnet, daß jedes der Abteile (D) mit einem Saugrohr (N) ausgerüstet ist, dessen Ventil geöffnet/geschlossen wird durch einen Ventilbetätigungshebel (L) und daß der Förderer (3) mit Werkstückhaltern versehen ist, die unter der Umlaufhaltevorrichtung (1) oder dem Trägerrad passieren, wobei der Abstand zwischen den Werkstückhaltern auf dem Förderer (3) doppelt so groß ist wie der zwischen den Abteilen (D) des Trägerrades (1), wobei die beiden Gruppen von Werkstückhaltern und Abteilen (D) synchron miteinander bewegt werden, so daß das Trägerrad und der Förderer (3) simultan die Stelle erreichen, an welcher sie zusammentreffen, und daß eine feste Nocke (4) und eine bewegliche Nocke (5) auf dem Hauptkörper des Gerätes vorgesehen sind, um die Stellung einer Betätigungswalze (L') zu steuern, die auf dem Ventilbetätigungshebel (L) angeordnet ist, auf eine Weise, daß die feste Nocke (4) den Ventilbetätigungshebel (L) anstößt, so daß dieser so bewegt wird, daß das entsprechende Abteil (D) des Trägerrades (1) das Werkstück (P), welches mit Hilfe von Unterdruck getragen werden soll, hält, während die bewegliche Nocke (5) synchron zur Drehung des Trägerrades (1) sich in eine aktive Stellung bewegt für jeden zweiten Durchgang eines Abteils (D) auf dem Trägerrad (1) und wenn das Abteil des Trägerrades (1) die Stelle erreicht, an welcher es nahe dem Werkstückförderer (3) ist, die bewegliche Nocke (5) den Ventilbetätigungshebel (L) stößt, so daß dieser bewegt wird, wodurch das Werkstück (P'), welches getragen wird, von der Saugkraft freikommt und auf den Förderer (3) abgeliefert wird.

6. Gerät nach Anspruch 2 oder 5, dadurch gekennzeichnet, daß jedes der Sauglöcher oder Saugnäpfe mit einer Vakuumquelle verbunden ist über eine Verbindungsvorrichtung mit einer Vielzahl von Venturi-Rohren (25) und einer Vielzahl von Ventilen zum Verbinden oder Trennen von Druckluft zu den Venturi-Rohren (25), wobei die Ventile am Außenumfang des Trägerrades (1) angeordnet sind, und daß eine hohle Antriebswelle (21) vorgesehen ist, die mit einer Druckluftzufuhr verbunden ist, die vom Inneren der hohlen Antriebswelle (21) zu den Übertragungsventilen zugeführt wird.

7. Gerät nach Anspruch 1, dadurch gekennzeichnet, daß die Zuführvorrichtung mit einem vorstehenden Schutzteil (36) in der Form eines Drehteils versehen ist mit im wesentlichen der gleichen Form wie die drehbare Zuführvorrichtung, welches nahe dem Drehteil (35) der Zuführvorrichtung angeordnet ist.

8. Gerät nach Anspruch 7, dadurch gekennzeichnet, daß das Drehteil (35) der Zuführvorrichtung einen dreieckigen Querschnitt hat.

9. Gerät nach Anspruch 7 oder 8, dadurch gekennzeichnet, daß das vorspringende Schutzteil (36) synchron zum Drehteil (35) der Zuführvorrichtung gedreht wird.

10. Gerät nach Anspruch 1, dadurch gekennzeichnet, daß die Transfertrommel (41) mit einer Vakuumhaltevorrichtung versehen ist mit einer Hohlkammer (45) und einer Druckkammer (46), die durch eine Trennwand (44) voneinander getrennt sind, wobei die Hohlkammer (45) in ihrem Inneren versehen ist mit einer Vielzahl von vakuumerzeugenden Venturi-Rohren (410), die jeweils mit einem Saugrohr (411) kommunizieren, und wobei die Druckkammer (46) verbunden ist mit einem Luftrohr (418) zum Zuführen von Druckluft und einer Druckkammer, die mit der Kammer der Venturi-Rohre (410) verbunden ist.

11. Gerät nach Anspruch 3, dadurch gekennzeichnet, daß der Neigungswinkel zwischen den Achsen der Übertragungstrommel (41) und der Umlaufhaltevorrichtung (1) die Hälfte des vorbestimmten Winkels zwischen den Zusatzteilen (B) und den Werkstücken (P), auf welchen die Teile befestigt werden sollen, beträgt.

12. Gerät nach Anspruch 1, dadurch gekennzeichnet, daß die Übertragungsvorrichtung eine Stößelplatte (62) aufweist, die eine kombinierte Bewegung durchführen kann mit einer Kreisbewegung synchron zur Bewegung des Trägerrades (1) und einer Bewegung in Richtung tangential zum Trägerrad (1).

**Revendications**

1. Appareil pour appliquer des articles accessoires sur des objets transportés en une suite dans laquelle ils sont équidistants, sur un transporteur comprenant un dispositif (32) d'alimentation destiné à faire avancer une bande continue (C) d'articles accessoires (B), des moyens de coupe (K) destinés à séparer les articles accessoires de ladite bande, des moyens de transfert comprenant un tambour rotatif de transfert (41, 53) muni de supports (411, 53a) pour transférer les articles accessoires séparés desdits moyens de coupe jusqu'à un emplacement où ils sont attachés par adhésif auxdits objets (P), caractérisé en ce qu'il comporte un dispositif porteur tournant (1) ayant un nombre impair de supports équidistants (D) et tournant en synchronisme avec le transporteur (3) pour prendre les objets (P) du transporteur (3), les déplacer le long d'un trajet circulaire et les replacer sur le transporteur (3); en ce que ledit tambour de transfert (41, 53) coopère avec ledit dispositif porteur tournant (1) pour appliquer les articles accessoires (B) sur les objets (P) portés par ledit dispositif porteur tournant (1) en une position éloignée du transporteur (3); et en ce que ledit dispositif d'alimentation comprend un élément rotatif (35) ayant plusieurs parties en arêtes parallèles (39) destinées à entrer en prise avec la bande continue (C) d'articles accessoires (B) dans une position située entre les articles (B), les mouvements dudit élément rotatif (35), dudit tambour rotatif (2) et dudit dispositif porteur tournant (1) étant synchronisés entre eux.

2. Appareil selon la revendication 1, caractérisé en ce que lesdits supports (D) sont des compartiments présentant des trous de succion ou des ventouses reliés à une source de vide, en ce que ledit dispositif porteur tournant (1) et ledit transporteur (3) sont synchronisés de manière qu'un compartiment porteur (D) sur deux pour un objet (P) coïncide avec un objet (P) avancé sur le transporteur (3).

3. Appareil selon la revendication 1, caractérisé en ce que ledit tambour (2) de transfert est conçu pour tourner sur un axe incliné par rapport à l'axe dudit dispositif porteur tournant (1) et en ce que lesdits supports (411) sont des moyens de maintien par vide destinés à maintenir les articles (B) durant l'opération de transfert et de positionnement.

4. Appareil selon la revendication 1 ou 2, caractérisé en ce que l'intervalle entre les objets (P) transportés sur ledit transporteur (3) est double de la distance entre les supports (D) du dispositif porteur tournant (1) et en ce que le dispositif porteur tournant (1) positionne l'objet (P') après un traitement au milieu de l'intervalle entre des objets successifs (P) sur ledit transporteur (3).

5. Appareil selon la revendication 2, caractérisé en ce que chacun desdits compartiments (D) est équipé d'un tuyau (N) de succion dont la valve est ouverte/fermée par un levier (L) d'actionnement de valve et en ce que le transporteur (3) est équipé de supports d'objets passant sous ledit dispositif porteur tournant (1) ou une roue porteuse, le pas entre les supports d'objets sur le transporteur (3) étant double de la largeur de celui entre les compartiments (D) de la roue porteuse (1), ces deux groupes de support d'objets et de compartiments (D) étant déplacés en synchronisme entre eux afin que la roue porteuse et le transporteur (3) atteignent simultanément la position dans laquelle ils coïncident, et en ce qu'une came fixe (4) et une came mobile (5) sont prévues sur le corps principal de l'appareil pour commander la position d'un galet d'actionnement (L') placé sur ledit levier (L) d'actionnement de valve, d'une manière telle que la came fixe (4) pousse le levier (L) d'actionnement de valve pour qu'il soit déplacé afin que le compartiment correspondant (D) de la roue porteuse (1) maintienne l'objet (P) à porter au moyen d'un vide alors que la came mobile (5), en synchronisme avec la rotation de la roue porteuse (1), se déplace vers une position active une fois pour chaque passage d'un pas sur deux d'un compartiment (D) de la roue porteuse (1) et, lorsque le compartiment de la roue porteuse (1) atteint ladite position dans laquelle il est proche du transporteur (3) d'objets, la came mobile (5) pousse le levier (L) d'actionnement de valve à déplacer afin que l'objet (P') à porter soit libéré de la force de succion et délivré au transporteur (3).

6. Appareil selon la revendication 2 ou 5, caractérisé en ce que chacun desdits trous de succion ou ventouses est relié à une source de vide au moyen d'un dispositif de raccordement comprenant plusieurs tubes (25) à Venturi et de plusieurs valves destinées à établir ou non l'application de l'air comprimé auxdits tubes à Venturi (25), lesdites valves étant placées sur la périphérie extérieure de la roue porteuse (1), et en ce qu'il est prévu un arbre creux menant (21) qui est relié à une alimentation en air comprimé, lequel est appliqué auxdits valves de transfert à partir de l'intérieur dudit arbre creux menant (21).

7. Appareil selon la revendication 1, caractérisé en ce que ledit dispositif d'alimentation est muni d'un élément anti-montée (36) sous la forme d'un élément rotatif ayant principalement la même forme que le dispositif rotatif d'alimentation et placé à proximité dudit élément rotatif (35) du dispositif d'alimentation.

8. Appareil selon la revendication 7, caractérisé en ce que ledit élément rotatif (35) du dispositif d'alimentation présente une section transversale triangulaire.

9. Appareil selon la revendication 7 ou 8, caractérisé en ce que l'élément anti-montée (36) est mis en rotation en synchronisme avec l'élément rotatif (35) du dispositif d'alimentation.

10. Appareil selon la revendication 1, caractérisé en ce que ledit tambour (41) de transfert est équipé d'un dispositif de maintien par vide comprenant une chambre à vide (45) et une chambre de pression (46), lesquelles chambres sont séparées par une cloison (44), ladite chambre à vide (45) étant équipée intérieurement de plusieurs tubes à Venturi (410) de génération de vide communiquant chacun avec un tuyau (411) de succion, ladite chambre de pression (46) étant raccordée à un tuyau (418) d'air pour l'alimentation en air comprimé et une chambre de pression étant raccordée à la chambre desdits tubes à Venturi (410).

11. Appareil selon la revendication 3, caractérisé en ce que l'angle d'inclinaison entre l'axe dudit tambour (41) de transfert et l'axe dudit dispositif porteur tournant (1) est égal à la moitié de l'angle prédéterminé entre les articles accessoires (B) et l'objet (P) sur lequel les articles doivent être scellés.

12. Appareil selon la revendication 1, caractérisé en ce que le dispositif de transfert comprend une plaque (62) de poussée qui est conçue pour exécuter un mouvement combiné comprenant un mouvement circulaire en synchronisme avec le mouvement de ladite roue porteuse (1) et un mouvement dans une direction tangente à ladite roue porteuse (1).

FIG. 1

FIG. 3

FIG. 2

FIG. 4

FIG. 5

FIG. 6

FIG. 7

FIG. 8

FIG. 9

0 117 920

FIG. 10

FIG. 11

6

FIG. 12

FIG. 13

FIG. 14

0 117 920

8

FIG. 15

FIG. 16

FIG. 17

0 117 920

10

FIG. 18

FIG. 19a

FIG. 19b

FIG. 19c

FIG. 19d

FIG. 19e

FIG. 19f

FIG.20

FIG. 21

FIG. 22

FIG. 23

FIG. 24

FIG. 25

FIG. 26

FIG. 28

53a

B

B

P

53

53a

P'

B

S

FIG. 29

C₁

C₂

B

B

C

B

B

B

S

S

S

S

FIG. 30

P₁

P

S

B

FIG. 31

F I G. 33

F I G. 32

FIG. 34

FIG. 35